(19) Europäisches Patentamt
European Patent Office
Office européen des brevets

(11) **EP 2 653 776 B1**

(12) **EUROPEAN PATENT SPECIFICATION**

(45) Date of publication and mention
of the grant of the patent:
**01.11.2017 Bulletin 2017/44**

(21) Application number: **11847993.0**

(22) Date of filing: **16.12.2011**

(51) Int Cl.:
*F21V 5/00* (2015.01)    *F21V 8/00* (2006.01)
*F21V 3/04* (2006.01)    *G02B 3/00* (2006.01)
*G02B 5/02* (2006.01)    *F21Y 115/10* (2016.01)
*F21Y 105/10* (2016.01)

(86) International application number:
**PCT/KR2011/009750**

(87) International publication number:
**WO 2012/081942 (21.06.2012 Gazette 2012/25)**

(54) **LIGHT-COLLECTING PLATE AND LIGHTING SYSTEM USING SAME**

LICHTAUFFANGENDE PLATTE UND BELEUCHTUNGSSYSTEM DAMIT

PLAQUE DE CAPTURE DE LUMIÈRE ET SYSTÈME D'ÉCLAIRAGE UTILISANT LADITE PLAQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2010 KR 20100129338**

(43) Date of publication of application:
**23.10.2013 Bulletin 2013/43**

(73) Proprietor: **Miraenanotech Co., Ltd.
Cheongwon-gun, Chungcheongbuk-do 363-911
(KR)**

(72) Inventors:
• **NOH, Sung Woo
Seongnam-si
Gyeonggi-do 463-410 (KR)**
• **LEE, Joon Hwan
Yongin-si
Gyeonggi-do 446-717 (KR)**
• **KWON, Jong Tae
Cheongwon-gun
Chungcheongbuk-do 363-785 (KR)**
• **KIM, Seun Ho
Cheongwon-gun
Chungcheongbuk-do 363-883 (KR)**
• **LEE, Hak Chung
Cheongwon-gun
Chungcheongbuk-do 363-783 (KR)**

(74) Representative: **Bingham, Ian Mark et al
The IP Asset Partnership Limited
Prama House
267 Banbury Road
Oxford OX2 7HT (GB)**

(56) References cited:
EP-A2- 2 063 293          WO-A1-2010/032903
JP-A- 2004 111 170        JP-A- 2004 191 611
JP-A- 2006 520 518        JP-A- 2008 284 795
JP-A- 2010 204 156        JP-A- 2010 250 037
KR-A- 20110 059 150       US-A1- 2008 192 484
US-A1- 2010 110 331

**Description**

[Technical Field]

The present invention relates to a light-collecting plate and a lighting system using the same. More particularly, the present invention relates to a light-collecting plate and a lighting system that may relieve a side glaring phenomenon by improving illumination of light emitted from a light source and controlling a viewing angle.

[Background Art]

In general, in the case of a point light source, particularly, a light emitting diode (LED), a radiation angle of emitted light is very large and thus, the point light source is generally used to emit light toward a widespread area or in a near distance. That is, in the case of emitting light toward a local area in a far distance using the LED, the light cannot be efficiently used.

Accordingly, in the case of using a point light source (LED) and the like in a lighting system according to a related art, a diffusion plate or the diffusion plate and an auxiliary diffusion sheet are used in a radiation path of light emitted from the LED in order to diffuse the light emitted from a plurality of LEDs. However, in the lighting system according to the related art, the light emitted from the LED is distributed due to the diffusion plate and the auxiliary diffusion sheet and thus, a side glaring phenomenon occurs due to a degradation in illumination and a wide viewing angle.

Accordingly, to overcome the aforementioned issue found in the lighting system using the point light source (LED), the present invention proposes a light-collecting plate that may improve illumination and control a viewing angle, and a lighting system using the same.

JP 2010/250037 describes a lighting system according to the preamble of claim 1.

[Disclosure]

[Technical Problem]

The present invention has been made in an effort to provide a lighting system that may prevent a side glaring phenomenon caused by a degradation in illumination and a wide viewing angle occurring in a lighting system using a point light source (light emitting diode (LED)). The present invention relates to a lighting system according to claim 1. In association with the aforementioned technical subject, the present invention discloses a lighting system using a light-collecting plate provided with a micro lens array configured to control a radiation path of light in order to collect light emitted from a light source and radiate the collected light.

However, the technical subject of the present invention is not limited to the aforementioned matter and other objects not described above may be clearly understood by those skilled in the art from the following description.

[Technical Solution]

To achieve the aforementioned technical subject, an exemplary embodiment of the present invention provides a lighting system including: at least one light source; a diffusion plate for diffusing light emitted from the light source; and a light-collecting plate for collecting the light diffused by the diffusion plate and radiating the collected light; wherein the diffusion plate includes diffusion beads regularly or irregularly therein to diverge a path of light output from the diffusion plate.

Here, at least one lens for collecting the light diffused from the diffusion plate and radiating the collected light, and for controlling a radiation path of the light is formed on one surface or both surfaces of the light-collecting plate.

Here, the lens is formed convexly on one surface or both surfaces of the light-collecting plate. That is, the lens is formed in a shape similar to a convex lens to collect light incident in a diffused state and to output the collected light.

Also, the lens is a micro lens array (MLA) formed as an array of micro size lenses having a minute size.

Further, the lens uses, as 0.4 to 0.8, a ratio (H/D) of a diameter (D) of the lens to a height (H) based on a plane of the light-collecting plate.

The lens is formed to have a diameter within the range of 30 $\mu$m to 80 $\mu$m, and the MLA is formed so that a density rate of the lens with respect to an area of the light-collecting plate is 65% to 90%.

Also, it needs to be noted that the light source used for the lighting system may assume a light emitting diode (LED).

[Advantageous Effects]

A lighting system according to the present invention verified from the description of the present specification may collect light emitted from a point light source such as a light emitting diode (LED) and output the collected light and thus, does not cause a side glaring issue that occurs due to a degradation in illumination and a wide viewing angle, which were found in a related art.

Also, according to the present invention, since a radiation path of light emitted from a point light source may be controlled by a lens provided to a light-collecting plate, it is possible to control illumination of light to be within the range in which a user is not visually affected.

[Description of Drawings]

FIG. 1 is a view to describe a lighting system according to a related art.

FIG. 2 is a view illustrating a light-collecting plate forming part of a lighting system according to an exemplary embodiment of the present invention.

FIG. 3 is a view illustrating a lighting system according to an exemplary embodiment of the present invention.

[Best Mode]

Hereinafter, exemplary embodiments of the present invention will be described in detail with reference to the accompanying drawings. In the following description, when it is described that a predetermined constituent element is connected to another constituent element, it indicates that the predetermined constituent element may be directly connected to the other constituent element and a third constituent element may be disposed therebetween. Initially, when assigning reference numerals to constituent elements of each drawing, it should be noted that like reference numerals refer to like constituent elements although they are illustrated in different drawings. Here, a configuration and an operation of the present invention illustrated in drawings and described thereby are explained as at least one embodiment and thus, the scope of the present invention, as defined by the appended claims, and a key configuration and operation thereof are not limited thereto.

Prior to describing the present invention, a lighting system according to a related art is disclosed.

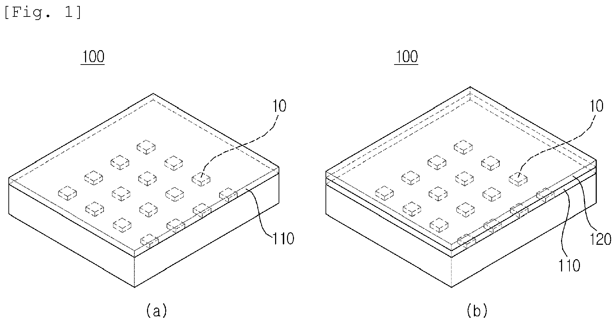

FIG. 1 is a view to describe the lighting system according to the related art.

As illustrated in FIG. 1, a lighting system 100 according to the related art is classified into (a) a case of including only a diffusion plate 110 and (b) a case of including the diffusion plate 110 and an auxiliary diffusion plate 120. That is, the lighting system 100 according to the related art is in a structure in which a plurality of light emitting diodes (LEDs) 10 is disposed and the diffusion plate 110 or the diffusion plate 110 and an auxiliary diffusion sheet 120 are disposed in a progress path of light emitted from the LED 10.

The diffusion plate 110 includes a plurality of diffusion beads (not shown) regularly or irregularly distributed therein to diffuse light emitted from the LED 10. The auxiliary diffusion sheet 120 is a sheet attached on a top surface of the diffusion plate 110 and provided to further evenly diffuse the light diffused by the diffusion plate 110 and does not have any function distinguished from the diffusion plate 110.

As described above, the lighting system 100 according to the related art further diffuses and radiates the light emitted from the LED 10 having a relatively wide radiation angle, using the diffusion plate 110 or the diffusion plate 110 and the auxiliary diffusion sheet 120 and thus, as described above, degrades illumination and forms a wide viewing angle, thereby causing glaring in the case of observing from a side of the lighting system 100.

Hereinafter, a light-collecting plate and a lighting system according to the present invention proposed to solve the issue found in the lighting system 100 according to the related art will be described.

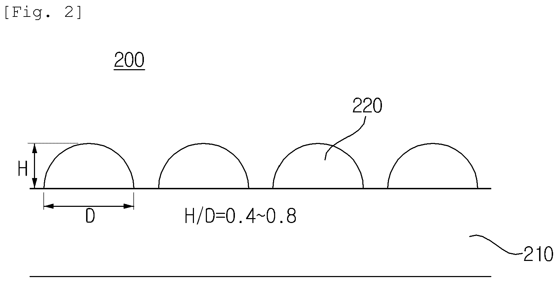

FIG. 2 is a view illustrating a light-collecting plate forming part of a lighting system according to an exemplary embodiment of the present invention.

As illustrated in FIG. 2, a light-collecting plate 200 includes a lens 220. In the following description, for ease of description, a description will be made by referring to a smooth surface of the light-collecting plate 200 as a base plate 210.

Although it is illustrated in FIG. 2 that the lens 220 is formed on a top surface of the base plate 210, the lens 220 may also be formed on a bottom surface of the base plate 210 or both the top surface and the bottom surface of the base plate 210. The base plate 210 may use a polycarbonate material, and the lens 220 may use an acrylic resin material and have a refractive index within the range of 1.45 to 1.65. However, any material capable of transmitting light emitted from a light source may be used without limitations thereon. The lens 220 is provided on the base plate 210 to prevent a wide viewing angle from being formed due to a wide radiation angle that is a characteristic of a light source (LED). That is, the lens 220 is formed in a convex shape to focus an optical path of light emitted from the light source and to output the light. The convex shape of the lens 220 is formed so that a ratio (H/D) of a diameter (D) of a single lens 220 to a height (H) based on a plane of the light-collecting plate 200, that is, the base plate 210, becomes 0.4 to 0.8, and the diameter of the lens 220 is formed to be within 30 $\mu$m to 80 $\mu$m. In the case of observing a cross-section of the light-collecting plate 200, the light-collecting plate 200 is provided in a complete semi-circular shape when H/D = 0.5, is provided in a sharply protruding elliptical shape in a vertical direction of the base plate 210 when 0.5 < H/D $\leq$1, and is provided in a gently protruding elliptical shape in the vertical direction of the base plate 210 when H/D < 0.5. The lens 220 strongly focuses light passing through the base plate 210 to form a gradually narrowing optical path when 0.5 <H/D $\leq$1, and relatively weakly focuses the light to form a gradually spreading optical path when H/D <0.5. Therefore, according to the present invention, it is possible to finally control illumination and a viewing angle by variously providing the shape of the lens 220 to thereby control an optical path in consideration of a lighting use. In the case in which the lens 220 is used for general lighting, H/D is determined to be within the range of 0.4 $\leq$H/D $\leq$0.8 for illumination and a viewing angle at which the user may feel psychological stability.

In addition, the lens 220 of the light-collecting plate 200 is a micro lens array (MLA) formed by regularly or irregularly arranging a plurality of lenses having a micro size. Here, the MLA is formed so that a density rate of the lens 220 with respect to an area of the light-collecting plate 200 becomes 65% to 90%. When forming, as the MLA in a minute structure, the lens 220 of the light-collecting plate 200 serving as a type of a filter in order to output the light emitted from the light source (LED) toward the user, the light may be evenly output and thus, it is possible to realize high quality of lighting. Depending on cases, when forming the MLA, it is possible to evenly emit light all over the surface of the light-collecting plate 200 by regularly forming an interval between the lens 220, or it is possible to emit soft (low illumination) light on a predetermined portion of the light-collecting plate 200 and to emit concentrative (high illumination) light on another portion of the light-collecting plate 200 by irregularly forming the interval between the lenses 220. Here, even in the case of regularly forming the interval between the lenses 220, it is possible to increase illumination in a predetermined portion of the entire surface of the light-collecting plate and to decrease the illumination in another portion thereof by controlling the aforementioned H/D. The light-collecting plate 200 on which the aforementioned MLA is formed may be manufactured using an imprinting scheme or a stamping scheme.

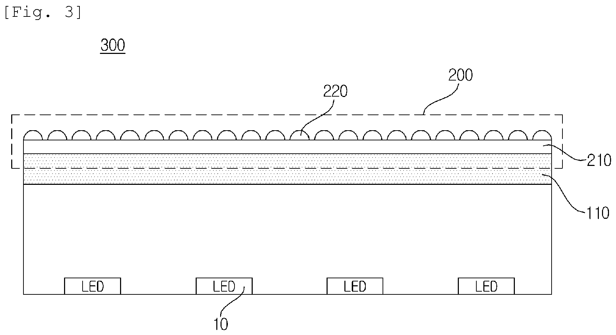

FIG. 3 is a view illustrating a lighting system according to an exemplary embodiment of the present invention.

As illustrated in FIG. 3, a lighting system 300 according to an exemplary embodiment includes the light source 10, the diffusion plate 110, and the light collecting plate 200. The light source 10 may use various types of light sources, but in the present embodiment, is provided as the LED 10. The diffusion plate 110 functions to receive light emitted from the LED 10, to radiate the received light toward a progress direction of light, and to diffuse the light in order to compensate for absence of the light according to an interval space between the light source 10 and the light source 10. Although not illustrated in the figure, the diffusion plate 110 includes diffusion beads regularly or irregularly therein to diverge a path of light output from the diffusion plate 110.

The light-collecting plate 200 is attached on a top surface of the diffusion plate 110 to collect light distributed by the diffusion plate 110 and output the collected light toward a user. A detailed description about the light-collecting plate 220 is described above with reference to FIG. 2 and thus, a repeated description will be omitted here.

Hereinafter, a result of quantitatively evaluating a level of a lighting system according to the present invention that affects a user using the lighting system or an occupant of an indoor applied with the lighting system will be introduced.

Currently, with the rising trend of pursuing comfort of an occupant using an indoor lighting in the European Countries (EU), the U.S.A., and the like, a standardization visual comfort probability (VCP), a unified glare rating (UGR), a daylight glare index (DGI), a luminance regulation law, and the like, have been published and commonly used in order to evaluate and regulate displeasure by glaring coming from a lighting using a point light source. In particular, in foreign countries, the UGR is representatively used. An UGR evaluation method is an evaluation method instituted by an International Commission on Illumination (CIE) for international standardization of unpleasant glare in 1995 and is a value evaluated by quantifying a displeasure level when viewing a light source with an eye of a person.

The UGR evaluation method is defined as the following Equation 1.

[Equation 1]

$$UGR = 8 \log \left[ \frac{0.25}{L_b} \sum \frac{L_s \omega}{p^2} \right]$$

$L_b$: luminance of background [$cd/m^2$]

$L_s$: Luminance of lighting equipment [$cd/m^2$]

$\omega$: Solid angle of lighting equipment [$sr$]

$p$: Guth positional index of light source

A value calculated using the above Equation 1 is expressed as evaluation criteria of seven steps as shown in the following Table 1.

[Table 1]

| Rating | UGR value |
| --- | --- |
| Just Intolerable | 31 |
| Uncomfortable | 28 |
| Just Uncomfortable | 25 |
| Unacceptable | 22 |
| Just Acceptable | 19 |
| Perceptible | 16 |
| Imperceptible | 10 |

According to the aforementioned UGR evaluation method, when URG values at all of measurement positions are 19 or less, a lighting system is evaluated as a lighting system that does not cause displeasure of a user.

In the lighting system according to the related art, the average URG value is 22.3 or more and thus, was measured to cause displeasure of an occupant. However, in the lighting system according to the present invention, the average URG value was able to be measured as 16.6 by improving illumination and controlling a viewing angle using a light-collecting plate having an MLA. Accordingly, the lighting system according to the present invention was verified to be capable of sufficiently relieving displeasure of an occupant.

As described above, although the present invention is described with reference to the embodiments and drawings, the present invention is not limited to the embodiments and thus, those skilled in the art may make various changes and modifications from the description. Accordingly, the scope of the present invention should be verified by the claims which follow and all the same or equivalent modifications belong to the scope of the invention as defined therein.

## Claims

1. A lighting system (300) comprising:

    at least one light source (10);
    a diffusion plate (110) for diffusing the light emitted from the light source (10);
    an auxiliary diffusion sheet (120) for further diffusing the light diffused by the diffusion plate (110); and
    a light-collecting plate (200) for collecting light diffused from the diffusion plate and the auxiliary diffusion sheet and radiating the collected light;
    wherein the diffusion plate and the auxiliary diffusion sheet are provided between the light source (10) and the light-collecting plate (200) and the auxiliary diffusion sheet (120) is attached on a top surface of the diffusion plate (110);
    wherein the diffusion plate includes diffusion beads regularly or irregularly therein to diverge a path of light output from the diffusion plate,
    at least one lens (220) for collecting the light diffused from the diffusion plate and the auxiliary diffusion sheet and radiating the collected light, and for controlling a radiation path of the light is formed on one surface or both surfaces of the light-collecting plate (200),
    the at least one lens (220) is an MLA with an array of micro size lenses that are formed convexly,
    the lens (220) uses, as 0.4 to 0.8, as a ratio (H/D) of a diameter (D) of the lens to a height (H) based on a plane of the light-collecting plate (200),
    the lens (220) is formed to have a diameter within the range of 30 $\mu$m to 80 $\mu$m,
    the MLA is formed by using a density rate of the lens (220) with respect to an area of the light-collecting plate (200) as 65% to 90%
    **characterized in that**:

the light-collecting plate (200) uses a polycarbonate resin material, and the lens (220) uses acrylic resin and has a refractive index of 1.45 to 1.65.

**Patentansprüche**

1.  Beleuchtungssystem (300), umfassend:

    mindestens eine Lichtquelle (10);
    eine Diffusionsplatte (110) zum Diffundieren von Licht, das von der Lichtquelle emittiert wird;
    eine Hilfsdiffusionsschicht (120) zum weiteren Diffundieren des von der Diffusionsplatte diffundierten Lichts; und
    eine lichtsammelnde Platte (200) zum Sammeln von durch die Diffusionsplatte und die Hilfsdiffusionsschicht diffundierten Lichts und Ausstrahlen des gesammelten Lichts;
    wobei die Diffusionsplatte und die Hilfsdiffusionsschicht zwischen der Lichtquelle (10) und der lichtsammelnden Platte (200) bereitgestellt sind und die Hilfsdiffusionsschicht (120) auf einer Deckfläche der Diffusionsplatte (110) angebracht ist;
    wobei die Diffusionsplatte regelmäßig oder unregelmäßig darin Diffusionskugeln beinhaltet, um einen Lichtausstoßweg der Diffusionsplatte zu divergieren;
    zumindest eine Linse (220) zum Sammeln des von der Diffusionsplatte und der Hilfsdiffusionsschicht diffundierten Lichts und Ausstrahlen des gesammelten Lichts, und zum Steuern eines Strahlengang des Lichts, die auf einer Oberfläche oder beiden Oberflächen der lichtsammelnden Platte (200) ausgebildet ist,
    wobei die zumindest eine Linse (220) eine MLA mit einer Anordnung von Mikrolinsen, die konvex ausgebildet sind, ist,
    wobei die Linse (220) 0,4 bis 0,8 als ein Verhältnis (H/D) eines Durchmessers (D) der Linse zu einer Höhe (H), basierend auf einer Ebene der lichtsammelnden Platte (200) verwendet,
    wobei die Linse (220) derart ausgebildet ist, dass sie einen Durchmesser im Bereich von 30 $\mu$m bis 80 $\mu$m aufweist,
    wobei die MLA unter Verwendung einer Dichterate der Linse (220) bezogen auf eine Fläche der lichtsammelnden Platte (200) von 65 % bis 95 % ausgebildet ist,
    **dadurch gekennzeichnet, dass**
    die lichtsammelnde Platte (200) ein Polycarbonat-Harzmaterial verwendet, und die Linse (220) Acrylharz verwendet und einen Brechungsindex von 1,45 bis 1,65 aufweist.

**Revendications**

1.  Système d'éclairage (300) comprenant :

    au moins une source de lumière (10) ;
    une plaque de diffusion (110) pour diffuser la lumière émise par la source de lumière (10) ;
    une feuille de diffusion auxiliaire (120) pour diffuser davantage la lumière diffusée par la plaque de diffusion (110) ; et
    une plaque collectrice de lumière (200) pour collecter la lumière diffusée par la plaque de diffusion et la feuille de diffusion auxiliaire et rayonner la lumière collectée ;
    dans lequel la plaque de diffusion et la feuille de diffusion auxiliaire sont prévues entre la source de lumière (10) et la plaque collectrice de lumière (200) et la feuille de diffusion auxiliaire (120) est attachée sur une surface de dessus de la plaque de diffusion (110) ;
    dans lequel la plaque de diffusion comporte des billes de diffusion de façon régulière ou irrégulière pour faire diverger un chemin de lumière fourni en sortie par la plaque de diffusion, au moins une lentille (220) pour collecter la lumière diffusée par la plaque de diffusion et la feuille de diffusion auxiliaire et rayonner la lumière collectée, et pour commander un chemin de rayonnement de la lumière est formée sur une surface ou les deux surfaces de la plaque collectrice de lumière (200),
    l'au moins une lentille (220) est un MLA avec un réseau de lentilles de microtaille qui est formé de façon convexe,
    la lentille (220) utilise, de 0,4 à 0,8, en tant que rapport (H/D) entre un diamètre (D) de la lentille et une hauteur (H) par rapport à un plan de la plaque collectrice de lumière (200),
    la lentille (220) est formée pour avoir un diamètre dans la plage de 30 $\mu$m à 80 $\mu$m,
    le MLA est formé en utilisant un taux de densité de la lentille (220) par rapport à une superficie de la plaque collectrice de lumière de 65 % à 90 %

**caractérisé en ce que** :

la plaque collectrice de lumière (200) utilise un matériau de résine de polycarbonate, et la lentille (220) utilise une résine acrylique et a un indice de réfraction de 1,45 à 1,65.

[Fig. 1]

100

100

(a)

(b)

[Fig. 2]

<u>200</u>

220

H

D

H/D=0.4~0.8

210

[Fig. 3]

300

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010250037 A